(19) **Europäisches Patentamt European Patent Office Office européen des brevets**

(11) **EP 1 517 502 B1**

(12) **FASCICULE DE BREVET EUROPEEN**

(45) Date de publication et mention
de la délivrance du brevet:
**24.01.2007 Bulletin 2007/04**

(51) Int Cl.:
***H04L 27/38*** *(2006.01)*

(21) Numéro de dépôt: **04292123.9**

(22) Date de dépôt: **02.09.2004**

(54) **Dispositif pour la ré-acquisition d'un signal modulé en cas d'interruption de la réception**

Vorrichtung zur Neuaquisition eines modulierten Signals bei einer Übergangssignalunterbrechung

Device for re-acquisition of a modulated signal in case of signal interruption

(84) Etats contractants désignés:
**DE FR GB IT**

(30) Priorité: **19.09.2003 FR 0311042**

(43) Date de publication de la demande:
**23.03.2005 Bulletin 2005/12**

(73) Titulaire: **STMicroelectronics S.A.**
**92120 Montrouge (FR)**

(72) Inventeurs:
• **Paille, Bruno**
**38960 Saint Aupre (FR)**
• **Bona, Mariano**
**38100 Grenoble (FR)**

(74) Mandataire: **Bentz, Jean-Paul**
**Novagraaf Technologies**
**Cabinet Ballot**
**122, rue Edouard Vaillant**
**92593 Levallois Perret Cedex (FR)**

(56) Documents cités:
**EP-A- 1 155 541      FR-A- 2 830 390**
**US-B1- 6 510 188**

**Description**

L'invention concerne de manière générale le domaine des techniques de transmission numérique et, plus particulièrement, celui de la réception d'un signal modulé transmis via un réseau câblé.

Plus précisément, l'invention concerne selon un premier de ses aspects, un dispositif démodulateur comprenant en entrée, un premier circuit de contrôle de puissance pour maintenir constante l'amplitude d'un signal d'entrée modulé en présence de fluctuations lentes de l'amplitude de la porteuse, le signal modulé étant transmis à un ensemble de circuits de démodulation en série, situés en aval dudit premier circuit de contrôle de puissance, pour appliquer au signal d'entrée un traitement de démodulation.

L'invention se rapporte plus particulièrement aux techniques numériques qui sont celles des réseaux câblés, sur lesquels les signaux transmis sont adaptés aux normes ITU-J83 Annexe A/B/C (ITU étant l'acronyme pour "International Telecommunication Union"). Typiquement, dans ce contexte, les signaux transmis sont modulés en amplitude et en phase selon la technique de modulation QAM, (acronyme pour l'expression anglo-saxonne "Quadrature Amplitude Modulation") dite modulation d'amplitude en quadrature de phase.

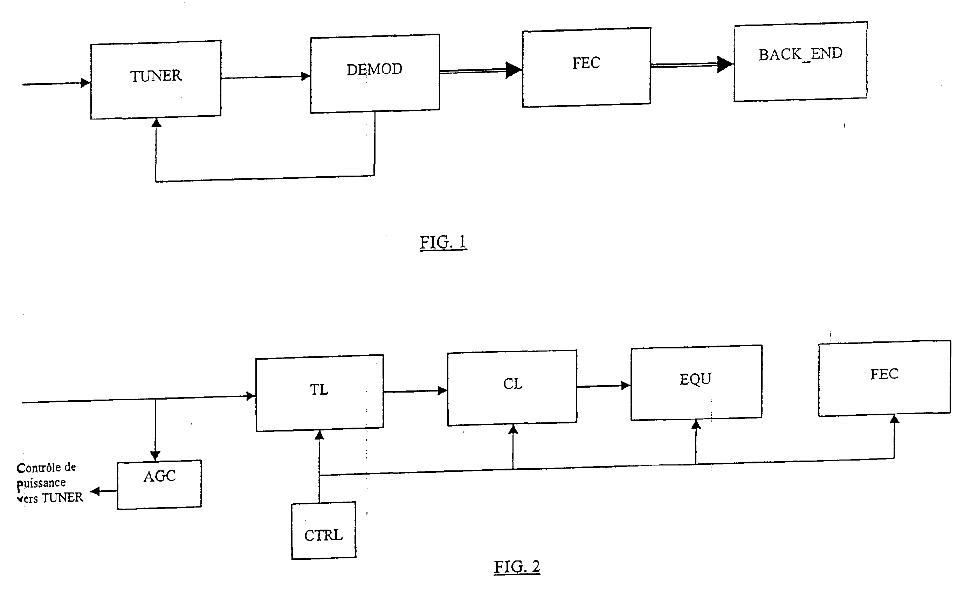

Un système de réception d'un signal modulé transmis sur câble est décrit à la figure 1. Un tel système de réception se compose généralement des blocs suivants : un dispositif sélecteur de canaux TUNER, un dispositif démodulateur DEMOD, un circuit correcteur d'erreur sans voie de retour FEC et, connecté en sortie du circuit correcteur d'erreur sans voie de retour, un circuit de traitement BACK_END qui est fonction du type de données transmises sur le canal, il peut s'agir par exemple d'un décodeur MPEG.

Le dispositif sélecteur de canaux TUNER réalise la transposition du signal analogique en radio-fréquence, par exemple dans la gamme 48-900 MHz vers un signal analogique en fréquence intermédiaire, par exemple 36, 44 ou 57 MHz, utilisable par le démodulateur. Le dispositif démodulateur réalise l'estimation des symboles émis. En d'autres termes, il réalise la suppression de la modulation et permet le passage du signal analogique en fréquence intermédiaire vers un signal numérique bande de base échantillonné au rythme d'émission des données. Le circuit correcteur d'erreur sans voie de retour FEC met en oeuvre un décodage correcteur d'erreur. Il effectue donc la correction d'erreur et supprime la redondance introduite dans le signal par l'encodeur présent dans le circuit de modulation. La sortie du circuit correcteur d'erreur FEC est alors constituée de paquets d'octets organisés sous forme de trames, appelées flux de transport ou "Transport Stream" dans la littérature anglo-saxonne (TS), ayant un format défini et comportant des informations de synchronisation en plus des données transportées.

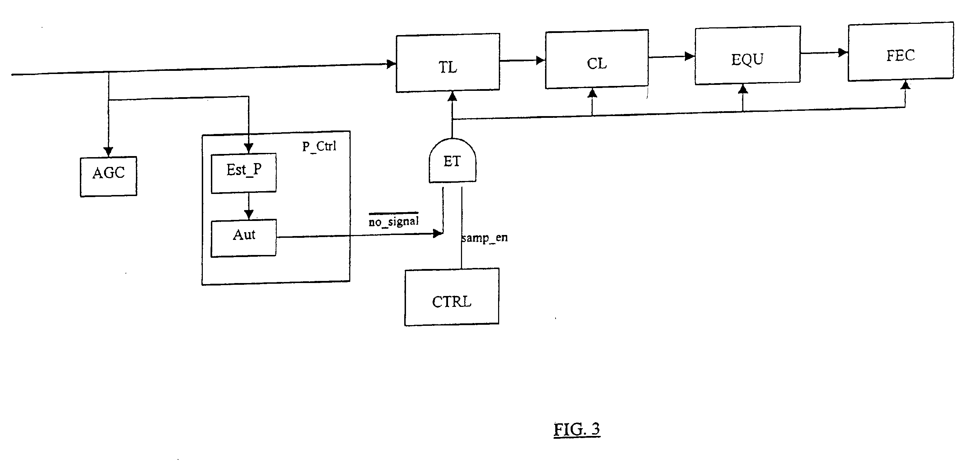

Le dispositif démodulateur du système de réception est classiquement composé des circuits de démodulation décrits à la figure 2. Un circuit de commande automatique de gain AGC est ainsi incorporé en entrée de l'étage démodulateur de sorte à maintenir sensiblement constant le niveau moyen du signal utile avant démodulation. Ce circuit effectue avantageusement une mesure de la puissance du signal en entrée du dispositif de réception et, grâce à une boucle de contre-réaction, agit sur l'amplification des étages en amont de manière à maintenir constante l'amplitude du signal de sortie en présence de fluctuations lentes de la porteuse.

Le dispositif démodulateur comprend également deux boucles de synchronisation. Une première boucle TL, dite boucle de timing, est chargée de l'estimation et de la correction de l'erreur entre les fréquences d'émission des données et la fréquence de réception des données (par exemple, ces fréquences sont de l'ordre de 5 MHz pour les normes ITU A/B/C). La seconde boucle CL, dite boucle porteuse, est chargée quant à elle de l'estimation et de la correction de l'erreur entre les fréquences de modulation et de démodulation des données (cette fréquence est classiquement de 36, 44 ou 57 MHz en entrée du démodulateur).

Un circuit égaliseur EQU est aussi prévu pour estimer et corriger les défauts de linéarité présents dans la chaîne de transmission. Il annule aussi les différents échos du signal. Le circuit égaliseur est classiquement composé d'un ou de plusieurs filtres adaptatifs.

Les circuits de démodulation tels qu'ils viennent d'être décrits composant l'ensemble démodulateur et FEC sont en fait cadencés au rythme d'une fréquence d'horloge FClk, au moyen d'éléments séquentiels élémentaires. La fréquence d'horloge est généralement supérieure à la fréquence des données et la cadence des opérations est généralement contrôlée au moyen d'un signal de synchronisation samp_en émis par l'intermédiaire d'un circuit de contrôle CTRLC. Lorsque le signal samp_en est au niveau logique 1, l'opération est réalisée. Lorsqu'il est au niveau logique 0, aucune opération n'est effectuée. En fonctionnement normal, le signal samp_en est un signal d'horloge périodique ayant une fréquence proportionnelle à la fréquence de réception des données.

On décrit ci-après brièvement les étapes principales de fonctionnement mises en oeuvre lors de la réception d'un canal par le système de réception. Classiquement, le système de réception travaille en deux modes : un mode acquisition et un mode synchronisation dit "tracking" dans la littérature anglo-saxonne.

Ainsi, après sélection du canal désiré, le système de réception est programmé en mode acquisition. Dans ce mode, seuls le dispositif démodulateur DEMOD et le circuit correcteur d'erreur FEC sont utilisés. En mode acquisition, le démodulateur, par l'intermédiaire de son circuit de commande automatique de gain AGC, commence par effectuer le contrôle de la puissance d'entrée. Une fois la puissance réglée à son niveau nominal, les deux boucles de synchronisation TL et CL ainsi que l'égaliseur EQU de l'étage démodulateur sont mis en route. Après convergence des boucles de synchronisation et de l'égaliseur, le démodulateur passe en mode tracking.

En mode tracking, le démodulateur suit et compense les variations lentes des caractéristiques du signal reçu par l'intermédiaire du circuit de commande automatique de gain AGC, des boucles de synchronisation TL et CL et de l'égaliseur EQU. A partir de cet instant, les données émises en sortie du démodulateur vers le circuit FEC sont exploitables. Le circuit FEC passe alors en mode acquisition.

Après synchronisation du FEC, le flux de transport TS en sortie du circuit FEC possède la bonne structure de trame et le circuit de traitement BACK_END peut alors être mis en route à son tour.

Le temps séparant la sélection du canal désiré et la synchronisation du flux de transport TS en sortie de l'ensemble démodulateur et FEC est nommé TSyncDemodFEC et est de l'ordre de 100ms. TSyncDemodFEC = TSyncDemod + TSyncFEC; avec TSyncDemod le temps de synchronisation du démodulateur qui est de l'ordre de 80ms et TsyncFEC le temps de synchronisation du circuit FEC qui est de l'ordre de 20ms.

Le temps nécessaire entre la synchronisation du circuit FEC et la synchronisation du circuit de traitement est nommé TSyncBackEnd et est de l'ordre de 500ms.

Ainsi, il faut déjà un temps défini comme suit TSyncDemodFEC + TSyncBackEnd, qui est de l'ordre de 600ms, entre l'instant de sélection du canal et la synchronisation du circuit de traitement.

De nombreux phénomènes physiques sont susceptibles d'entraîner des "trous" de transmission, qui se traduisent notamment par de courtes interruptions à la réception du signal par le démodulateur. Un cas typique de courtes interruptions de la réception du signal consiste en la déconnexion puis en la reconnexion du câble de réception.

Lorsque le câble de réception se trouve ainsi accidentellement déconnecté puis reconnecté, le signal disparaît pendant un court instant. Cette courte disparition du signal entraîne cependant la perte de synchronisation du dispositif démodulateur et, en particulier, entraîne une désynchronisation des boucles timing et porteuse ainsi qu'une divergence de l'égaliseur. Le démodulateur s'en trouve donc désynchronisé et il s'ensuit en conséquence une désynchronisation du circuit FEC et du circuit de traitement BACK_END.

Une solution actuelle pour pallier ce problème consiste à détecter la perte de synchronisation des circuits du dispositif de réception, puis à re-programmer l'ensemble démodulateur et FEC en mode acquisition et à attendre une re-synchronisation de ces circuits. La détection de la perte de synchronisation consiste en fait classiquement à détecter que le flux de transport TS en sortie du circuit FEC est corrompu ou bien que les données en sortie du circuit BACK_END sont corrompues

EP1155541-A décrit un système de réception pour reconstituer un signal de données à partir d'un signal de données d'entrée, comprenant un étage de démodulation constitué d'un circuit amplificateur de gain variable, d'un circuit égaliseur et d'un circuit échantillonneur connectés en série. Le signal en sortie du circuit échantillonneur est appliqué à un circuit détecteur d'erreur, dont le rôle est d'effectuer la détection de symboles et la correction automatique des certaines fautes détectées. Une sortie du circuit détecteur d'erreurs est en outre exploitée par un circuit de contrôle, pour générer des signaux de contrôle des boucles de synchronisation respectivement pour le contrôle automatique de gain, l'adaptation de l'égaliseur et la commande du circuit échantillonneur. Le circuit détecteur d'erreurs comprend des moyens de génération d'un signal d'effacement, basé sur une information d'effacement instantanée dans le cas où le signal d'entrée du circuit détecteur d'erreurs se situe a l'intérieur d'une zone d'effacement prédéterminée. Ces moyens de génération du signal d'effacement sont couplés avec le circuit de contrôle pour une utilisation pratiquement instantanée, de sorte que pendant les périodes d'effacement du signal d'entrée au niveau du circuit détecteur d'erreurs, les signaux de commande des boucles de contrôle des circuits de demodulation sont gelés.

Dans ce cas, le démodulateur rebascule en mode acquisition. La réception se trouve alors interrompue pendant un temps défini comme suit :

$$\text{Tinterruption} + \text{TDetect} + \text{TSyncDemod} + \text{TSyncFEC} + \text{TSyncBackEnd} \text{ ;}$$

Où TDetect correspond au temps nécessaire à la détection de la perte de synchronisation en sortie du circuit FEC (ou en sortie du circuit BACK_END) et Tinterruption correspond au temps d'interruption de la communication sur le câble.

La durée d'interruption de la réception, du fait du temps nécessaire à la re-synchronisation des différents circuits de réception et notamment du démodulateur, constitue donc un inconvénient majeur lors de disparitions accidentelles du signal pendant un court instant.

Par ailleurs, ce problème nécessite une intervention du logiciel de contrôle des différents modes de fonctionnement du système de réception puisqu'il est nécessaire de re-programmer l'ensemble démodulateur et FEC en mode acquisition pour permettre une re-synchronisation de ces circuits en cas de courte disparition du signal. L'unité de traitement du système de réception mettant en oeuvre le logiciel de contrôle se trouve donc sollicité en permanence pendant toute la durée du processus de réception d'un canal pour s'assurer du bon déroulement des opérations et pour intervenir en cas de disparition du signal pendant un court instant à l'entrée du démodulateur et, en conséquence, ses ressources ne peuvent être libérées à d'autres fins.

C'est donc un objectif de la présente invention de résoudre les inconvénients précités de l'art antérieur de façon à réduire au maximum la durée de perte de réception du signal en cas de courte interruption de la réception du signal, par exemple du fait d'une déconnexion accidentelle du câble de réception, et ainsi à permettre un redémarrage rapide du traitement de démodulation par les circuits de démodulation lorsque le signal est récupéré.

Un autre objectif de la présente invention vise à effectuer cette opération de redémarrage sans qu'il y ait besoin d'un quelconque contrôle extérieur du système de réception et, en particulier, sans qu'il y ait nécessité d'une intervention du logiciel de contrôle des différents modes de fonctionnement du système de réception pour gérer cette opération en cas de disparition du signal pendant un court instant à l'entrée du démodulateur.

Avec cet objectif en vue, l'invention concerne un dispositif démodulateur comprenant en entrée, un premier circuit de contrôle de puissance pour maintenir constante l'amplitude d'un signal d'entrée modulé en présence de fluctuations lentes de l'amplitude de la porteuse, ledit signal modulé étant transmis à un ensemble de circuits de démodulation en série, situés en aval dudit premier circuit de contrôle de puissance, pour appliquer au signal d'entrée un traitement de démodulation, ledit dispositif étant caractérisé en ce qu'il comprend un second circuit de contrôle de puissance du signal d'entrée, prévu pour générer un signal de commande pouvant prendre deux états, un état signal présent représentatif de la détection de la présence du signal d'entrée et un état signal disparu représentatif de la détection de la disparition du signal d'entrée, et des moyens pour désactiver les circuits de démodulation lorsque le signal de commande passe de l'état signal présent à l'état signal disparu, de manière à éviter leur désynchronisation, et pour activer les circuits de démodulation lorsque le signal de commande passe de l'état signal disparu à l'état signal présent, de manière à permettre une démarrage rapide du traitement de démodulation.

Selon une caractéristique de l'invention, les circuits de démodulation sont cadencés par un signal de synchronisation pouvant prendre un premier état où les circuits de démodulation sont actifs et un second état où les circuits de démodulation sont inactifs, les moyens de désactivation et d'activation des circuits logiques étant conçu pour forcer ledit signal de synchronisation dans ledit second état lorsque le signal de commande est dans l'état signal disparu, et pour maintenir ledit signal de synchronisation dans ledit premier état lorsque le signal de commande est dans l'état signal présent.

Avantageusement, les moyens de désactivation et d'activation comprennent un circuit logique ET, recevant sur une première entrée le signal de commande émis par le second circuit de contrôle de puissance et, sur une seconde entrée, le signal de synchronisation, la sortie du circuit logique ET étant connectée à chacun des circuits de démodulation, l'état signal présent du signal de commande correspondant à un état logique haut et l'état signal disparu dudit signal de commande correspondant à un état logique bas.

De préférence, le second circuit de contrôle de puissance comprend un circuit d'estimation de puissance pour estimer la puissance du signal d'entrée, associé à une machine d'état à au moins deux états contrôlée par une détection à double seuils avec hystérésis, ladite machine d'état générant le signal de commande dans l'état signal présent lorsque la puissance estimée passe au-dessus d'un premier seuil correspondant à un seuil de détection de la présence du signal d'entrée, et dans l'état signal disparu lorsque la puissance estimée passe au-dessous d'un second seuil correspondant à un seuil de détection de la disparition du signal d'entrée.

Selon un mode de réalisation particulier, la machine d'état comprend des moyens pour mémoriser des paramètres de démodulation du signal d'entrée toutes les fois où le signal d'entrée est détecté présent pendant au moins deux estimations de puissance successives et des moyens pour configurer les circuits de démodulation en fonction desdits paramètres mémorisés lors du passage du signal de commande de l'état signal disparu à l'état signal présent.

Selon un mode de réalisation, le premier état du signal de synchronisation correspond à un signal d'horloge et le second état dudit signal de validation correspond à un état logique bas.

Selon un mode de réalisation, les circuits de démodulation destinés à être désactivés à la détection de la disparition du signal d'entrée comprennent deux boucles de synchronisation et un circuit égaliseur.

Selon un autre mode de réalisation, les circuits de démodulation destinés à être désactivés à la détection de la disparition du signal d'entrée comprennent en plus un circuit correcteur d'erreur sans voie de retour.

De préférence, le signal d'entrée est un signal modulé en amplitude et en phase selon la technique de modulation QAM, transmis par l'intermédiaire d'un réseau câblé.

L'invention concerne également un système de réception d'un signal modulé, comprenant un dispositif démodulateur selon la présente invention.

D'autres caractéristiques et avantages de la présente invention apparaîtront plus clairement à la lecture de la description suivante donnée à titre d'exemple illustratif et non limitatif et faite en référence aux figures annexées dans lesquelles :

- la figure 1, déjà décrite, illustre schématiquement les différents blocs composant un dispositif de réception d'un signal transmis sur câble de l'état de la technique et, parmi ces blocs, se trouve le dispositif de démodulation DEMOD décrit plus en détail à la figure 2;

- la figure 2, déjà décrite, illustre schématiquement les différents blocs composant un dispositif démodulateur selon l'état de la technique;
- la figure 3 illustre schématiquement un dispositif démodulateur selon la présente invention;
- la figure 4 illustre un premier mode de réalisation de l'invention pour la gestion des états signal présent et signal disparu, et
- la figure 5 illustre un deuxième mode de réalisation de l'invention pour la gestion des états signal présent et signal disparu.

La présente invention est en fait basé sur le principe suivant consistant à effectuer une détection de la disparition du signal d'entrée modulé le plus en amont possible des circuits de démodulation du dispositif démodulateur de sorte à éviter la désynchronisation de ces circuits. Comme on l'a vu, une telle désynchronisation peut se produire par exemple en cas de courte interruption de la réception du signal à cause d'une déconnexion et d'une reconnexion du câble de réception.

Ainsi, en référence à la figure 3 illustrant un dispositif démodulateur selon la présente invention, on prévoit d'ajouter en entrée du démodulateur un second circuit de contrôle de puissance P_Ctrl chargé de détecter toute disparition du signal d'entrée modulé. Il est à noter que les éléments en commun de la figure 3 avec la figure 2 qui ont déjà été décrits portent les mêmes références.

Le rôle de ce second circuit de contrôle de puissance P_Ctrl est de générer un signal de commande $\overline{\texttt{no\_signal}}$ pouvant prendre deux états, un état signal présent, représentatif de la détection de la présence du signal d'entrée, et un état signal disparu, représentatif de la détection de la disparition du signal d'entrée. De préférence, l'état signal présent du signal de commande $\overline{\texttt{no\_signal}}$ correspond à un état logique haut, et l'état signal disparu du signal de commande correspond à un état logique bas.

Pour ce faire, le circuit P_Ctrl comprend tout d'abord un circuit d'estimation de puissance Est_P pour estimer la puissance du signal modulé en entrée du dispositif démodulateur.

Selon un mode de réalisation particulier, la puissance du signal d'entrée pourra être estimée dans le circuit Est_P par l'intermédiaire du calcul du module du signal d'entrée. Une façon simplifiée de calculer la puissance d'un signal S est fournie par la formule suivante :

$$\texttt{P(S) = max (abs(S)) + 0.5*min(abs(S)), où abs}$$

$$\texttt{désigne la valeur absolue.}$$

Dans un mode de réalisation préféré, le circuit d'estimation de puissance Est_P est prévu pour fournir le résultat de son estimation à une machine d'état Aut à au moins deux états, contrôlée par une détection à double seuils avec hystérésis, pour gérer l'état signal présent/signal disparu.

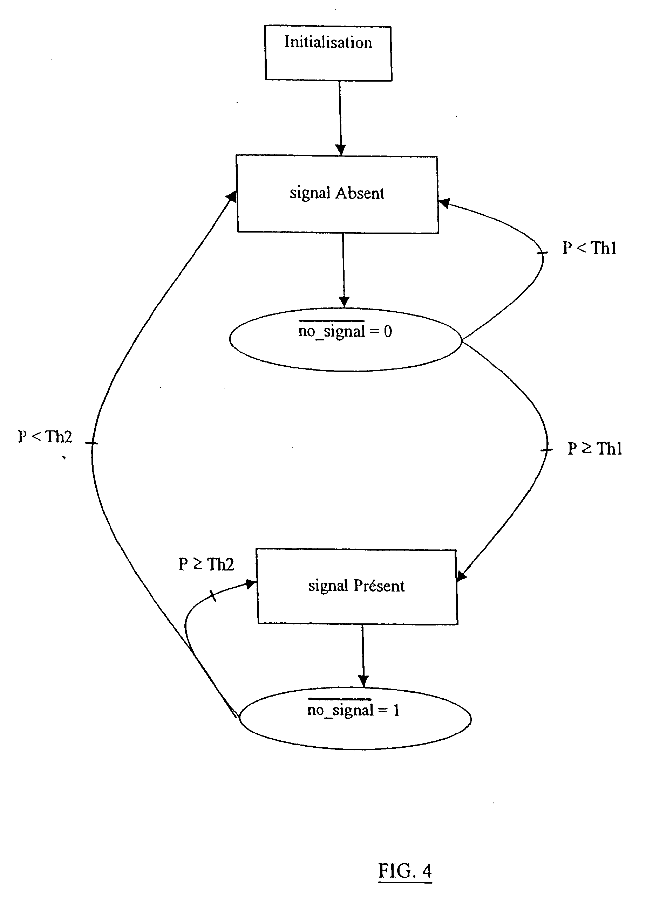

La figure 4 montre d'ailleurs à cet effet un premier mode de fonctionnement de l'invention pour la gestion des états respectifs signal présent et signal disparu par la machine d'état. Sur la figure 4, P correspond à l'estimation courante de la puissance du signal d'entrée effectuée par le circuit d'estimation de puissance Est_P. Th1 correspond au seuil de détection du signal et Th2 au seuil de disparition du signal. On a classiquement Th1≥Th2.

La machine d'état Aut est donc conçu pour générer le signal de commande $\overline{\texttt{no\_signal}}$ dans l'état signal présent lorsque la puissance estimée P passe au-dessus du premier seuil Th1 (PZTh1) qui correspond au seuil de détection de la présence du signal d'entrée, et dans l'état signal absent ou disparu lorsque la puissance estimée P passe au-dessous du second seuil Th2 (P<Th2) qui correspond au seuil de détection de la disparition du signal d'entrée.

Le dispositif démodulateur selon l'invention comprend également des moyens pour désactiver les circuits de démodulation TL, CL, EQU, et éventuellement le circuit FEC, lorsque le signal de commande $\overline{\texttt{no\_signal}}$ passe de l'état signal présent à l'état signal disparu, de manière à éviter la désynchronisation de ces circuits, et pour activer les circuits de démodulation lorsque le signal de commande passe de l'état signal disparu à l'état signal présent, de manière à permettre un démarrage rapide du traitement de démodulation par les circuits de démodulation une fois que la réception du signal d'entrée est rétablie.

Un mode de réalisation particulier pour la mise en oeuvre de la désactivation et de l'activation des circuits de démodulation est maintenant décrit en référence à la figure 3.

Classiquement, les circuits de démodulation sont cadencés par le signal de synchronisation samp_en, au rythme d'une fréquence d'horloge FClk, généralement supérieure à la fréquence de réception des données. Le signal de synchronisation peut prendre un premier état où les circuits de démodulation sont actifs et un second état où les circuits de démodulation sont inactifs. Dans son premier état, le signal de synchronisation samp_en correspond à un signal d'horloge et dans son second état, il correspond à un état logique bas. Ainsi, en fonctionnement normal, le signal samp_en est un signal de périodique ayant une fréquence proportionnelle à la fréquence de réception des données.

Les moyens de désactivation et d'activation des circuits logiques sont alors conçu pour forcer le signal de synchronisation samp_en dans son second état, correspondant au niveau logique 0, lorsque le signal de commande $\overline{no\_signal}$ est dans l'état signal disparu, et pour maintenir le signal de synchronisation dans son premier état, correspondant à un signal d'horloge, lorsque le signal de commande est dans l'état signal présent.

Pour ce faire, les moyens de désactivation et d'activation comprennent un circuit logique ET, recevant sur une première entrée le signal de commande $\overline{no\_signal}$ émis par l'intermédiaire du second circuit de contrôle de puissance P_Ctrl et, sur une seconde entrée, le signal de synchronisation samp_en. La sortie du circuit logique ET est quant à elle connectée à chacun des circuits de démodulation TL, CL, EQU. Dans un mode de réalisation particulier, la sortie du circuit logique ET est également connectée au circuit FEC pour permettre également une désactivation de ce circuit.

De cette façon, le signal de synchronisation samp_en est remplacé par un ET logique entre lui-même et le signal $\overline{no\_signal}$ ayant le niveau logique 1 lorsque le signal d'entrée est présent et le niveau logique 0 lorsque le signal d'entrée est disparu.

Ainsi, quand le circuit de contrôle de puissance P_Ctrl détecte une perte du signal d'entrée, correspondant à un niveau logique 0 du signal de commande $\overline{no\_signal}$ dans la machine d'état Aut, le signal de sortie du circuit logique ET est au niveau logique 0 ,quel que soit l'état du signal de synchronisation samp_en, ce qui revient à forcer ce signal de synchronisation dans son second état où les circuits de démodulation sont désactivés.

De cette façon, il est possible d'éviter toute désynchronisation des circuits de démodulation en cas de disparition brusque du signal d'entrée pendant un court instant, et en particulier, on évite tout divergence des différentes boucles de synchronisation TL et Cl présentes dans le dispositif démodulateur, ainsi que de l'égaliseur EQU et du circuit FEC dans le mode de réalisation où celui-ci est effectivement désactivé.

Les caractéristiques du signal après rétablissement de la communication, composées essentiellement par ses fréquences ainsi que l'estimation du canal, seront quasiment identiques aux dernières estimations réalisées par les circuits de démodulation du démodulateur avant la coupure de la communication ayant entraînée la disparition du signal. Ainsi, une fois que la communication se trouve rétablie, le circuit de contrôle de puissance P_Ctrl détecte le retour du signal d'entrée, correspondant à un niveau logique 1 du signal de commande $\overline{no\_signal}$ dans la machine d'état Aut, le forçage du signal de synchronisation samp_en est supprimé, ce qui revient à réactiver les circuits de démodulation.

De ce fait, dès que le circuit de contrôle de puissance P_Ctrl détecte le retour du signal d'entrée, les circuits de démodulation situés en aval du circuit de contrôle de puissance P_Ctrl sont réactivés et la synchronisation est effectuée sur un temps beaucoup plus rapide que la solution de l'art antérieur, égal à Tinterruption+TSyncFEC+Tsync-BackEnd.

Le dispositif démodulateur permet donc un démarrage rapide du traitement de démodulation effectué par les circuits de démodulation en cas de courte interruption de la réception du signal d'entrée et de retour de la communication.

Cependant, pour assurer de tels résultats, la puissance P du signal d'entrée doit pouvoir être estimée sur un temps suffisamment court. En effet, un temps d'estimation trop long de la puissance du signal d'entrée provoque une corruption de ce signal et risque en conséquence d'entraîner la désynchronisation des circuits de démodulation du dispositif démodulateur.

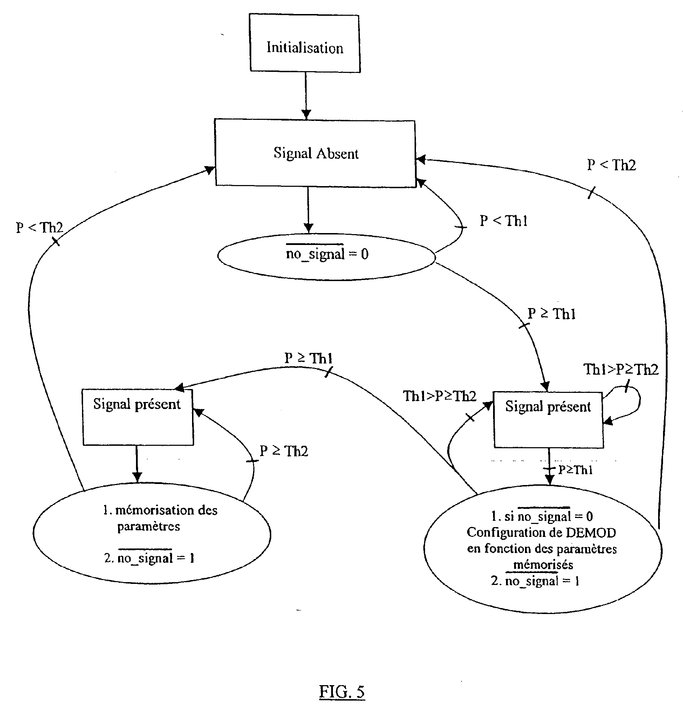

Dans un contexte où la contrainte d'avoir à estimer la puissance sur un temps suffisamment court est rédhibitoire, on peut remplacer la machine d'état précédente par une machine à trois états. La figure 5 décrit donc un deuxième mode de fonctionnement de l'invention pour la gestion des états respectifs signal présent et signal disparu par la machine d'état dans ce contexte. Comme à la figure 4, P correspond à l'estimation courante de la puissance du signal d'entrée effectuée par le circuit d'estimation de puissance Est_P. Th1 correspond au seuil de détection du signal et Th2 au seuil de disparition du signal. On a classiquement Th1≥Th2.

La machine d'état Aut est donc conçu pour générer le signal de commande $\overline{\texttt{no\_signal}}$ dans l'état signal présent lorsque la puissance estimée P passe au-dessus du premier seuil Th1 (P≥Th1) qui correspond au seuil de détection de la présence du signal d'entrée, et dans l'état signal disparu lorsque la puissance estimée P passe au-dessous du second seuil Th2 (P<Th2) qui correspond au seuil de détection de la disparition du signal d'entrée.

Cependant, dans ce mode de fonctionnement particulier, le dispositif démodulateur est doté de moyens, non représentés, pour mémoriser des paramètres de démodulation du signal d'entrée (fréquence de réception, fréquence de porteuse, caractéristique du canal...). De préférence, comme illustré sur la figure, les paramètres de démodulation sont mémorisés toutes les fois où le signal d'entrée est détecté présent (P≥Th1) pendant au moins deux estimations de puissance successives. Des moyens pour configurer les circuits de démodulation du dispositif démodulateur en fonction des paramètres mémorisés lors du passage du signal de commande $\overline{\texttt{no\_signal}}$ de l'état signal absent à l'état signal présent sont alors prévus. Ainsi, lors du passage du signal de commande de l'état signal absent (P<Th2) à l'état signal présent (P≥Th1), les paramètres de démodulation sont lus dans les moyens de mémorisation et permettent d'initialiser des variables correspondantes dans les circuits de démodulation du démodulateur.

Ainsi, ce mode de fonctionnement permet également un démarrage plus rapide des circuits de démodulation après leur désactivation puis réactivation, en cas d'interruption courte de la réception du signal d'entrée.

Il convient également de noter que le processus qui vient d'être décrit de désactivation et d'activation des circuits de démodulation en cas de courte interruption de la réception du signal, est effectué de façon autonome par le dispositif démodulateur et sans aucun besoin de contrôle extérieur au dispositif démodulateur et, en particulier, sans intervention du logiciel de contrôle des différents modes de fonctionnement du système de réception intégrant le dispositif démodulateur.

Enfin, le dispositif démodulateur selon la présente invention est facilement utilisable dans un système de réception d'un signal modulé, en particulier pour les signaux modulés selon la technique de modulation QAM transmis par l'intermédiaire d'un réseau câblé.

**Revendications**

1. Dispositif démodulateur comprenant en entrée, un premier circuit de contrôle de puissance (AGC) pour maintenir constante l'amplitude d'un signal d'entrée modulé en présence de fluctuations lentes de l'amplitude de la porteuse, ledit signal modulé étant transmis à un ensemble de circuits de démodulation (TL, CL, EQU) en série, situés en aval dudit premier circuit de contrôle de puissance, pour appliquer au signal d'entrée un traitement de démodulation, ledit dispositif étant **caractérisé en ce qu'**il comprend un second circuit de contrôle de puissance (P_Ctrl) du signal d'entrée, situé en entrée dudit dispositif démodulateur en amont desdits circuits de démodulation et prévu pour générer un signal de commande ($\overline{no\_signal}$) pouvant prendre deux états, un état signal présent représentatif de la détection de la présence du signal d'entrée et un état signal disparu représentatif de la détection de la disparition du signal d'entrée, et des moyens pour désactiver les circuits de démodulation lorsque le signal de commande passe de l'état signal présent à l'état signal disparu, de manière à éviter leur désynchronisation, et pour activer les circuits de démodulation lorsque le signal de commande passe de l'état signal disparu à l'état signal présent, de manière à permettre un démarrage rapide du traitement de démodulation.

2. Dispositif selon la revendication 1, **caractérisé en ce que** les circuits de démodulation sont cadencés par un signal de synchronisation (samp_en) pouvant prendre un premier état où les circuits de démodulation sont actifs et un second état où les circuits de démodulation sont inactifs, les moyens de désactivation et d'activation des circuits logiques étant conçu pour forcer ledit signal de synchronisation dans ledit second état lorsque le signal de commande ($\overline{no\_signal}$) est dans l'état signal disparu, et pour maintenir ledit signal de synchronisation dans ledit premier état lorsque le signal de commande est dans l'état signal présent.

3. Dispositif selon la revendication 2, **caractérisé en ce que** les moyens de désactivation et d'activation comprennent un circuit logique ET, recevant sur une première entrée le signal de commande ($\overline{no\_signal}$) émis par le second circuit de contrôle de puissance (P_Ctrl) et, sur une seconde entrée, le signal de synchronisation (samp_en), la sortie du circuit logique ET étant connectée à chacun des circuits de démodulation, l'état signal présent du signal de commande ($\overline{no\_signal}$) correspondant à un état logique haut et l'état signal disparu dudit signal de commande correspondant à un état logique bas.

4. Dispositif selon l'une quelconque des revendications précédentes, **caractérisé en ce que** le second circuit de contrôle de puissance (P_Ctrl) comprend un circuit d'estimation de puissance (Est_P) pour estimer la puissance (P) du signal d'entrée, associé à une machine d'état (Aut) à au moins deux états contrôlée par une détection à double seuils avec hystérésis, ladite machine d'état générant le signal de commande ($\overline{no\_signal}$) dans l'état signal présent lorsque la puissance estimée (P) passe au-dessus d'un premier seuil (Th1) correspondant à un seuil de détection de la présence du signal d'entrée, et dans l'état signal disparu lorsque la puissance estimée (P) passe au-dessous d'un second seuil (Th2) correspondant à un seuil de détection de la disparition du signal d'entrée.

5. Dispositif selon la revendication 4, **caractérisé en ce qu'**il comprend des moyens pour mémoriser des paramètres de démodulation du signal d'entrée toutes les fois où le signal d'entrée est détecté présent pendant au moins deux estimations de puissance successives et des moyens pour configurer les circuits de démodulation en fonction desdits paramètres mémorisés lors du passage du signal de commande ($\overline{no\_signal}$) de l'état signal disparu à l'état signal présent.

6. Dispositif selon l'une quelconque des revendications 2 à 5, **caractérisé en ce que** le premier état du signal de synchronisation (samp_en) correspond à un signal d'horloge et **en ce que** le second état dudit signal de validation correspond à un état logique bas.

7. Dispositif selon l'une quelconque des revendications précédentes, **caractérisé en ce que** les circuits de démodulation destinés à être désactivés à la détection de la disparition du signal d'entrée comprennent deux boucles de synchronisation (TL, CL) et un circuit égaliseur (EQU).

8. Dispositif selon la revendication 7, **caractérisé en ce que** les circuits de démodulation destinés à être désactivés à la détection de la disparition du signal d'entrée comprennent en plus un circuit correcteur d'erreur sans voie de retour (FEC).

9. Dispositif selon l'une quelconque des revendications précédentes, **caractérisé en ce que** le signal d'entrée est un signal modulé en amplitude et en phase selon la technique de modulation QAM transmis par l'intermédiaire d'un réseau câblé.

10. Système de réception d'un signal modulé, **caractérisé en ce qu'**il comprend un dispositif démodulateur selon l'une quelconque des revendications précédentes.


**Claims**

1. Demodulator device comprising an input, a first power control circuit (AGC) to keep constant the amplitude of an input signal modulated in the presence of slow fluctuations in the amplitude of the carrier, said modulated signal being transmitted to a set of demodulation circuits (TL, CL, EQU) in series, located downstream of said first power control circuit, to apply a demodulation processing to the input signal, said device being **characterized in that** it comprises a second power control circuit (P_Ctrl) of the input signal, located at the input of said demodulator device upstream of said demodulation circuits and designed to generate a control signal ($\overline{no\_signal}$) that can take two states, a signal present state representative of the detection of the presence of the input signal and a signal disappeared state representative of the detection of the disappearance of the input signal, and means for deactivating the demodulation circuits when the control signal changes from the signal present state to the signal disappeared state, so as to prevent them going out of synchronization, and to activate the demodulation circuits when the control signal changes from the signal disappeared state to the signal present state, so as to allow the demodulation processing to be started up rapidly.

2. Device according to Claim 1, **characterized in that** the demodulation circuits are clocked by a synchronization signal (samp_en) that can take a first state where the demodulation circuits are active and a second state where the demodulation circuits are inactive, the deactivation and activation means of the logic circuits being designed to force said synchronization signal into said second state when the control signal $(\overline{no\_signal})$ is in the signal disappeared state, and to keep said synchronization signal in said first state when the control signal is in the signal present state.

3. Device according to Claim 2, **characterized in that** the deactivation and activation means comprise an AND logic circuit, receiving on a first input the control signal $(\overline{no\_signal})$ emitted by the second power control circuit (P_Ctrl) and, on a second input, the synchronization signal (samp_en), the output of the AND logic circuit being connected to each of the demodulation circuits, the signal present state of the control signal $(\overline{no\_signal})$ corresponding to a high logic state and the signal disappeared state of said control signal corresponding to a low logic state.

4. Device according to any one of the preceding claims, **characterized in that** the second power control circuit (P_Ctrl) comprises a power estimation circuit (Est_P) to estimate the power (P) of the input signal, associated with a state machine (Aut) with at least two states controlled by a dual-threshold detection with hysteresis, said state machine generating the control signal $(\overline{no\_signal})$ in the signal present state when the estimated power (P) rises above a first threshold (Th1) corresponding to a threshold of detection of the presence of the input signal, and in the signal disappeared state when the estimated power (P) falls below a second threshold (Th2) corresponding to a threshold of detection of the disappearance of the input signal.

5. Device according to Claim 4, **characterized in that** it comprises means for memorizing demodulation parameters of the input signal every time when the input signal is detected present during at least two successive power estimations and means for configuring the demodulation circuits according to said memorized parameters when the control signal $(\overline{no\_signal})$ changes from the signal disappeared state to the signal present state.

6. Device according to any one of Claims 2 to 5, **characterized in that** the first state of the synchronization signal (samp_en) corresponds to a clock signal and **in that** the second state of said validation signal corresponds to a low logic state.

7. Device according to any one of the preceding claims, **characterized in that** the demodulation circuits intended to be deactivated on the detection of the disappearance of the input signal comprise two synchronization loops (TL, CL) and one equalizer circuit (EQU).

8. Device according to Claim 7, **characterized in that** the demodulation circuits intended to be deactivated on the detection of the disappearance of the input signal additionally comprise an error correcting circuit with no return channel (FEC).

9. Device according to any one of the preceding claims, **characterized in that** the input signal is an amplitude-modulated and phase-modulated signal according to the QAM modulation technique transmitted via a wired network.

10. System for receiving a modulated signal, **characterized in that** it comprises a demodulator device according to any one of the preceding claims.

**Patentansprüche**

1. Demodulatorvorrichtung umfassend am Eingang eine erste Leistungsregelungsschaltung (AGC) zum Konstanthalten der Amplitude eines Eingangssignals, das bei langsamen Fluktuationen der Amplitude der Trägerfrequenz moduliert ist, wobei das modulierte Signal an eine Anordnung aus Seriendemodulationsschaltungen (TL, CL, EQU) übertragen ist, welche stromabwärts der ersten Leistungsregelungsschaltung angeordnet sind, um einem Eingangssignal eine Demodulationsbehandlung zu unterziehen, **dadurch gekennzeichnet, daß** sie umfaßt eine zweite Leistungsregelungsschaltung (P_Ctrl) für das Eingangssignal, welche am Eingang der Demodulatorvorrichtung stromaufwärts der Demodulationsschaltungen angeordnet ist und zum Erzeugen eines Steuerungssignals $(\overline{no\_signal})$ vorgesehen ist, das zwei Zustände einnehmen kann, wobei ein Signalzustand das Erfassen der Anwesenheit eines Eingangssignals repräsentiert und ein verschwundener Signalzustand dem Erfassen des Verschwindens des Eingangssignals entspricht, und eine Einrichtung zum Deaktivieren der Demodulationsschaltungen, wenn das Steuersignal von dem anwesenden Signalzustand zum verschwundenen Signalzustand wechselt, so daß dessen Desynchronisation vermieden wird, und eine Einrichtung zum Aktivieren der Demodulationsschaltungen umfaßt, wenn das Steuersignal von dem verschwundenen Signalzustand in den anwesenden Signalzustand wechselt, so daß eine schnelle Demodulationsbehandlung beginnen kann.

2. Vorrichtung nach Anspruch 1, **dadurch gekennzeichnet, daß** die Demodulationsschaltungen durch ein Synchronisationssignal (samp_en) getaktet sind, das einen ersten Zustand, in dem die Demodulationsschaltungen aktiv sind, und einen zweiten Zustand einnehmen kann, in dem die Demodulationsschaltungen inaktiv sind, wobei die Einrichtung zum Deaktivieren und die Einrichtung zum Aktivieren der logischen Schaltungen dazu ausgelegt sind, das Synchronisationssignal in den zweiten Zustand zu zwingen, wenn das Steuerungssignal $(\overline{no\_signal})$ in dem verschwundenen Signalzustand ist, und das Synchronisationssignal in dem ersten Zustand zu halten, wenn das Steuerungssignal in dem anwesenden Signalzustand ist.

3. Vorrichtung nach Anspruch 2, **dadurch gekennzeichnet, daß** die Einrichtung zum Deaktivieren und die Einrichtung zum Aktivieren eine logische Schaltung ET umfaßt, die an einem ersten Eingang das Steuerungssignal $(\overline{no\_signal})$, das von der zweiten Leistungsregelungsschaltung (P_Ctrl) ausgegeben ist, und an einem zweiten Eingang das Snychronisationsignal (samp_en) empfängt, wobei der Ausgang der logischen Schaltung ET mit jeder Demodulationsschaltung verbunden ist, wobei der anwesende Signalzustand des Steuerungssignals $(\overline{no\_signal})$ einem hohen logischen Zustand und der verschwundene Signalzustand des Steuerungssignals einem niedrigen logischen Zustand entsprechen.

4. Vorrichtung nach einem der vorstehenden Ansprüche, **dadurch gekennzeichnet, daß** die zweite Leistungsregelungsschaltung (P_Ctrl) eine Leistungsschätzungsschaltung (Est_P) zum Schätzen der Leistungen (P) des Eingangssignals umfaßt, welche Leistungsschätzungsschaltung mit einer Zustandsmaschine (Aut) mit wenigstens zwei Zuständen verbunden ist, die durch ein Erfassen einer Doppelschwelle mit Hysterese gesteuert ist und das Steuerungssignal $(\overline{no\_signal})$ in dem anwesenden Signalzustand, wenn die geschätzte Leistung (P) eine erste Schwelle (Th1) passiert, die einer Erfassungsschwelle der Anwesenheit des Eingangssignals entspricht und in dem verschwundenen Signalzustand erzeugt, wenn die geschätzte Leistung (P) eine zweite Schwelle (Th2) passiert, die einer Erfassungsschwelle des Verschwindens des Eingangssignals entspricht.

5. Vorrichtung nach Anspruch 4, **dadurch gekennzeichnet, daß** sie eine Einrichtung zum Speichern von Demodulationsparametern des Eingangssignals jedesmal, wenn das Eingangssignal, während wenigstens zweier aufeinanderfolgender Leistungsschätzungen vorliegt, und eine Einrichtung zum Konfigurieren der Demodulationsschaltungen in Abhängigkeit von den gespeicherten Parametern beim Wechseln des Steuerungssignals $(\overline{no\_signal})$ von dem verschwundenen Signalzustand in den vorliegenden Signalzustand umfaßt.

6. Vorrichtung nach einem der Ansprüche 2 bis 5, **dadurch gekennzeichnet, daß** der erste Zustand des Synchronisationssignals (samp_en) einem Taktgebersignal entspricht und daß der zweite Zustand des Validationssignals einem niedrigen logischen Zustand entspricht.

7. Vorrichtung nach einem der vorstehenden Ansprüche, **dadurch gekennzeichnet, daß** die Demodulationsschaltungen, die auf das Erfassen des Verschwindens des Eingangssignals deaktivierbar sind, zwei Synchronisationsschleifen (TL, CL) und eine Ausgleichschaltung (EQU) umfassen.

8. Vorrichtung nach Anspruch 7, **dadurch gekennzeichnet, daß** die Demodulationsschaltungen, die auf das Erfassen des Verschwindens des Eingangssignals deaktivierbar, zusätzlich eine Fehlerkorrekturschaltung ohne Rückführpfad (FEC) umfassen.

9. Vorrichtung nach einem der vorstehenden Ansprüche, **dadurch gekennzeichnet, daß** das Eingangssignal ein Signal ist, das gemäß der Modulationstechnik QAM amplituden- und phasenmoduliert ist, wobei es mit Hilfe eines Kabelnetzes übertragen wird.

10. System zum Empfangen eines modulierten Signals, **dadurch gekennzeichnet, daß** es eine nach einem der vorstehenden Ansprüche ausgebildete Demodulatorvorrichtung umfaßt.

FIG. 1

FIG. 2

FIG. 3

EP 1 517 502 B1

Initialisation

signal Absent

$\overline{no\_signal} = 0$

P < Th1

P < Th2

P ≥ Th1

P ≥ Th2

signal Présent

$\overline{no\_signal} = 1$

FIG. 4

Initialisation

Signal Absent

P < Th2

P < Th2

$\overline{no\_signal} = 0$

P < Th1

P ≥ Th1

P ≥ Th1

Th1>P≥Th2

Signal présent

Th1>P≥Th2

Signal présent

P ≥ Th2

P≥Th1

1. mémorisation des paramètres

2. $\overline{no\_signal} = 1$

1. si $\overline{no\_signal} = 0$
Configuration de DEMOD en fonction des paramètres mémorisés
2. $no\_signal = 1$

FIG. 5